# EUROPEAN PATENT SPECIFICATION

(11) **EP 1 278 657 B1**
(45) Date of publication and mention of the grant of the patent: **28.07.2004**
(21) Application number: 01916520.8
(22) Date of filing: 09.03.2001
(51) Int. Cl.: B60R 21/01

(54) **AIRBAG SYSTEM WITH BIOMECHANICAL GRAY ZONES**
AIRBAGSYSTEM MIT BIOMECHANISCHEN GRAUZONEN
SYSTEME DE COUSSIN DE SECURITE GONFLABLE A ZONES GRISES BIOMECANIQUES

(30) Priority: 01.05.2000 US 201044 P; 24.05.2000 US 578822
(43) Date of publication of application: 29.01.2003
(73) Proprietor: KEY SAFETY SYSTEMS, INC., Sterling Heights, Michigan 48314 (US)
(72) Inventor: COOPER, John, Oxford, MI 48371 (US)
(74) Representative: Gislon, Gabriele
(86) International application number: PCT/US2001/007584
(87) International publication number: WO 2001/083267

(56) References cited:
- DE-A- 19 816 989
- US-A- 5 626 359
- M. KLEINBERGER, E. SUN, R. EPPINGER: "Development of Improved Injury Criteria for the Assesment of Advanced Automotive Restraint Systems" NATIONAL HIGHWAY TRAFFIC SAFETY ADMINISTRATION, September 1998 (1998-09), pages 1-104, XP002177250
- PHEN R L ET AL: "Advanced Air Bag Technology Assessment - Final Report" JET PROPULSION LAB PROGRESS REPORT, XX, XX, April 1998 (1998-04), XP002137509

## Description

This invention relates to a motor vehicle safety restraint system having biomechanical gray zones that define the operation of the restraint system.

Advances in inflator technologies allow the use of multilevel output airbag inflators. While these new inflators significantly improve vehicle occupant safety over a wide range of crash conditions, they also greatly increase the complexity of a system's design and performance.

In analyzing airbag system performance, it is useful to divide the system into three discrete regimes:
1. Information: acquiring information about rashes and vehicle occupants;
2. Analysis/Decision: analyzing the acquired information to determine the nature of the crash and the circumstances of the front seat occupants, and deciding how to deploy the airbag system accordingly; and
3. Response: adjusting the deployment of the airbag (i.e. inflator) in response to the decision.

Airbag systems acquire information through sensors. All airbag systems have some kind of crash sensor indicating the occurrence of a crash and its severity. These systems process information from the crash sensors using an algorithm to make decisions for airbag deployment. The systems may also have sensors that provide information about such things as seat belt use, child seat use, vehicle occupant weight, size and location, and seat position. The information from the sensors is used by the electronic control unit to make decisions as to whether and when the airbag is to be deployed. Airbag systems using these advanced technologies use the information to tailor the inflation levels of multi-stage airbags.

The information, analysis/decision, and response aspects of airbag systems offer opportunities for improving vehicle occupant protection. For example, with improved information about crash severity, the decision whether or not to deploy an airbag can be made earlier in a crash. If an airbag system includes sensors, which provide information about vehicle occupant weight and/or size or location, it can be designed to suppress deployment in the presence of a young child or to deploy differently for small adults and large adults. Critical to these advanced systems is the ability to activate multilevel inflators at various levels depending on crash scenarios. The region where it is acceptable to activate either low or high level outputs is referred to herein and in the claims as the biomechanical gray zone.

Simulation studies using specific vehicle models and crash situations are used to define the biological gray zones. Impact velocity and restraint conditions are analyzed using vehicle occupant simulation models. In the example case, only in-position mid-seated 50th% (fiftieth percentile) vehicle occupant performance has been investigated; it is of course envisioned that the development of an actual restraint system with biomechanical gray zones would include vehicle occupants of various sizes. DE 198 16 989 A discloses a vehicle occupant sensing apparatus for controlling the operating characteristics of a vehicle's safety restraint system which comprises an airbag module having an inflator capable of generating a low level output and an inflator capable of generating a high level output. The sensing apparatus comprises a crash sensor producing a first signal indicating the deceleration of the vehicle during a crash and a controller receiving the first signal. The controller, which generates a signal that is used to control said operating characteristics of the vehicle's safety restrain system, has a first lower threshold indicative of the minimum change in velocity at which the inflator capable of generating a low level output should be activated and a first must-fire high threshold indicative of a minimum change in velocity at which the inflator capable of generating a high level output should be activated.

According to the present invention there is provided a vehicle occupant sensing apparatus for controlling the operating characteristics of a vehicle's safety restraint system with the features of claim 1.

### Brief Description of the Drawings

Fig. 1 is a pictorial view of an automotive safety restraint system according to the present invention.
Figs. 2 and 3 are screen shots from the computer model used to develop the preferred embodiment of the invention.
Fig. 4 is a graph representing the output of the driver and passenger inflators at high and low levels.
Figs. 5-7 are plots showing the correlation between the computer model's response and sled tests of belted and unbelted drivers and passengers.
Fig. 8 shows a definition of the biomechanical gray zones.
Fig. 9 shows the biomechanical gray zone with a sensors gray zone.
Figs. 10 and 11 show an example of a driver's biomechanical gray zone.
Figs. 12 and 13 show an example a passenger's biomechanical gray zone.
Fig. 14 shows the biomechanical gray zones.
Fig. 15 shows the overlap of the driver and passenger biomechanical gray zones.
Fig. 16 shows a composite driver and passenger biomechanical gray zone.

### Detailed Description of the Invention

While the present invention is described in detail below generally with respect to a vehicle safety restraint system for forward crashes, it will be appreciated by those skilled in the art that the invention is clearly not limited to forward sensed crashes and may be applied to various other crash scenarios such as side impact or roll-over, as further discussed herein.

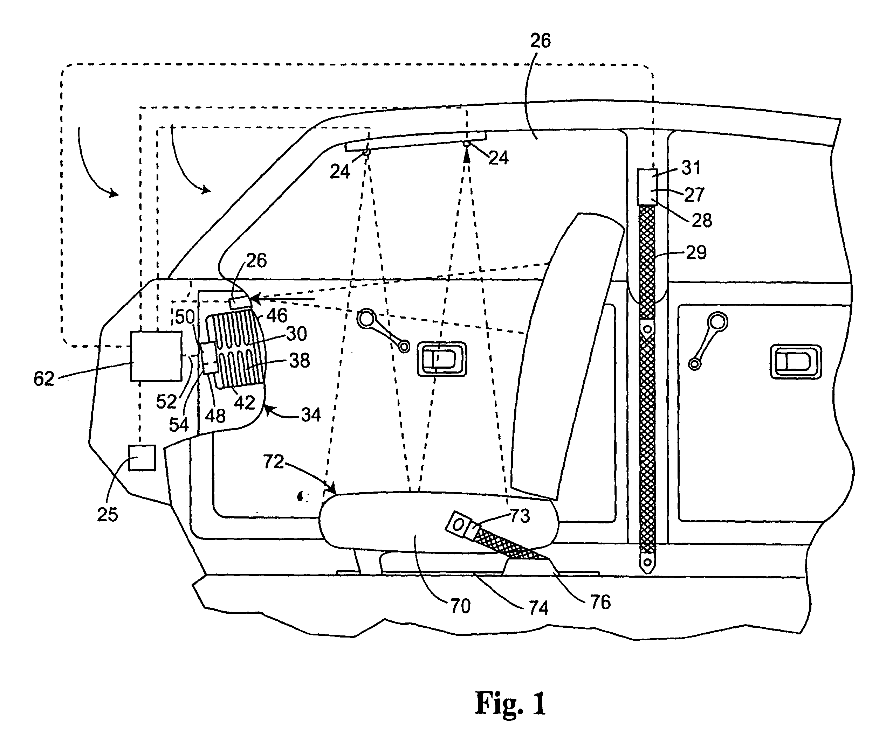

FIG. 1 is a pictorial view of a typical vehicle passenger compartment 26 having a plurality of sensors in accordance with a preferred embodiment of the present invention that will be used to control the operating characteristics of the vehicle's safety restraint system. The vehicle safety restraint system includes a retractor 27 about which a seat belt 29 is wound. A pretensioner or belt tightener 28 is associated with either the retractor or a buckle. A pretensioner squib 31 activates the pretensioner. An airbag module 30 is mounted in an instrument panel 34, or steering wheel or side of the vehicle or vehicle seat.

The advanced airbag system uses a crash sensor 25 and vehicle occupant sensors 24 to obtain information about crashes and vehicle occupants. This information can be used to adapt the performance of the airbag to the characteristics of the crash. As noted above, it can be used in determining whether an airbag 38 should be deployed, when it should be deployed, and, if it has multiple inflation levels, at what level and rate of inflation.

A crash sensor 25 measures the severity of a crash; i.e., the rate of reduction in velocity when a vehicle strikes another object. If a relatively low severity crash is sensed, only the low-level stage of a dual-stage airbag inflator will be activated; if a moderate severity crash is sensed, the low and high-level stages of a dual-stage airbag inflator will be activated with a specific time delay between the two stages; and if a more severe crash is sensed, both stages will be activated either simultaneously or with a very small interval (5 - 10 milliseconds) between the stages.

Information from crash sensors in conjunction with seat belt use sensors are used to select the appropriate crash severity threshold levels for belted and unbelted vehicle occupants. For instance, multiple speed thresholds for deploying airbags are envisioned and it is the setting of threshold speeds that is the subject of this invention. For example, a vehicle can have a lower threshold for airbag deployment at approximately 19 km/h when a vehicle occupant is unbelted and a higher threshold of approximately 29 km/h is utilized when the vehicle occupant is belted. A belt buckle switch provides the information to allow the selection between these two thresholds.

The airbag module 30 has an airbag 38 that is folded and stored inside of an airbag housing 42. A deployment door 46 covers the airbag and is configured to open upon inflation of the airbag. The deployment door can be part of the instrument panel or separate therefrom.

An inflator has a first gas source 52 and second gas source 54 mounted at the back of the airbag housing 42 and is operatively connected to the airbag 38. Gas from the first and/or second gas sources 52, 54 is provided to the airbag such that the airbag is inflated.

The gas sources 52, 54 typically have electrically actuated igniters 48, 50 referred to as squibs. The squibs actuate the first and/or second gas sources 52, 54 to produce or release inflation gas. The squibs may be individually activated, simultaneously activated, or activated in staged sequence to control the rate or degree of airbag deployment.

In addition to using crash severity and seat belt use information for dual threshold strategies, this information is also utilized to employ different inflation levels for belted and unbelted vehicle occupants through the use of the multi-stage airbag inflator. For instance, a belted vehicle occupant may only need a low-powered inflation level, since the seat belts also provide restraint, while an unbelted vehicle occupant may require a full-powered airbag to provide a timely inflation and full protection by the airbag. Similarly, the crash severity information may be used with a multi-stage inflator to employ a low level of airbag inflation in a low-severity crash or full-power inflation in a high-severity crash, in which additional restraint is needed for vehicle occupant protection.

The squibs 48, 50, a vent valve, retractor 27 and/or buckle pretensioner 28 are electrically activated by a controller 62, such as a microcomputer, when a crash is sensed. The controller 62 provides the necessary signals such that the appropriate dynamic inflation profile of the airbag is produced and the seat belt is tuned for particular crash conditions and the presence and/or position of the vehicle occupant.

Additionally, other sensors are envisioned, which suppress the airbag in the presence of children to prevent undesirable deployments. To accomplish this, manufacturers are refining seat weight or seat pattern recognition systems for detecting vehicle occupant size and/or position.

A weight sensing system 70 located in the seat cushion 72 or at the base of the seat estimates the weight of the vehicle occupant through various load cell technologies. The latter approach has the potential for avoiding the possible difficulties that can be created for seat-cushion weight sensors when the seat back is tilted back enough to transfer a significant portion of the vehicle occupant's weight from the seat cushion to the seat back. The algorithms associated with these devices can take into consideration and minimize the effects of belt cinch forces (for example, from child safety seats) by using belt tension-measuring hardware to adjusted assessment of weight.

Other advanced vehicle occupant detection systems under development use technologies, such as capacitive, ultrasonic, and infrared sensors for sensing vehicle occupant size and/or location with respect to the airbag module. These are used in the development of dynamic and static suppression strategies.

Strategies for static vehicle occupant detection systems have the capacity to determine whether airbag deployment is warranted, or what level of inflation is appropriate, for the size and/or position of the vehicle occupant. For example, whether the vehicle occupant is a small child or a full-sized adult, or whether the vehicle occupant is against the seat back or is sitting on the edge of the seat, closer to the airbag). These technologies may be used in conjunction with seat weight sensing/pattern recognition systems, or seat belt use and crash severity sensing, to improve the vehicle occupant classification and location estimates.

Dynamic suppression strategies using advanced technologies, such as capacitive, ultrasonic, and infrared 24, will make dynamic assessments of when a vehicle occupant is out of position by determining the location of the vehicle occupant during the crash. These technologies have rapid sensing capabilities and algorithms to make the airbag deployment or suppression decision, for example, in the event of pre-impact braking.

The airbag systems link sensors that determine whether the vehicle occupant is using his or her seat belt and where the vehicle occupant has positioned the vehicle seat along the seat track 74 (i.e., all or nearly all the way forward or farther back). The advanced airbag system using the crash sensors 25 and dual-stage inflators 52, 54 use seat belt usage information to adjust deployment thresholds or inflation levels. Since an unbelted vehicle occupant is more susceptible than a belted vehicle occupant to injury in less severe crashes, the unbelted vehicle occupant needs the protection of an airbag at lower crash seventies than a belted vehicle occupant does. Accordingly, the airbag would deploy at a lower threshold for an unbelted vehicle occupant.

Seat position sensors 76 determine how far forward or back a seat is adjusted on its track 74. The advanced airbag system 72 is designed so a dual-stage airbag 38 deploys at a lower level when the seat is all the way forward than it does when the seat is farther back. This would benefit those short-stature drivers who move their seats all the way forward or mid-to-tall-stature drivers who move their seats farther back.

The implementation of dual stage inflators 52, 54 is essential for the current invention. The flexibility of the inflator output provides the ability to fire a low-level, high-level or staged-delay level depending on the impact velocity or other criteria. For the purpose of the following example, only the high and low-level outputs were considered. It is the definition of these firing thresholds that defines the biomechanical gray zones. The region where it is acceptable to deploy either low or high level outputs is referred to herein and in the claims as a biomechanical gray zone.

Because of the complexity of the system and system requirements, it is necessary to make a determination and system definition of the biomechanical gray zones by conducting a complex set of computer crash simulations. These simulations are used to determine under what circumstances the initiation of a restraint component will likely improve the overall vehicle occupant safety, as well as determine when there is an increase in the possibility of injury induced by actuation of the restraint component. An example of such a restraint simulation is defined below.

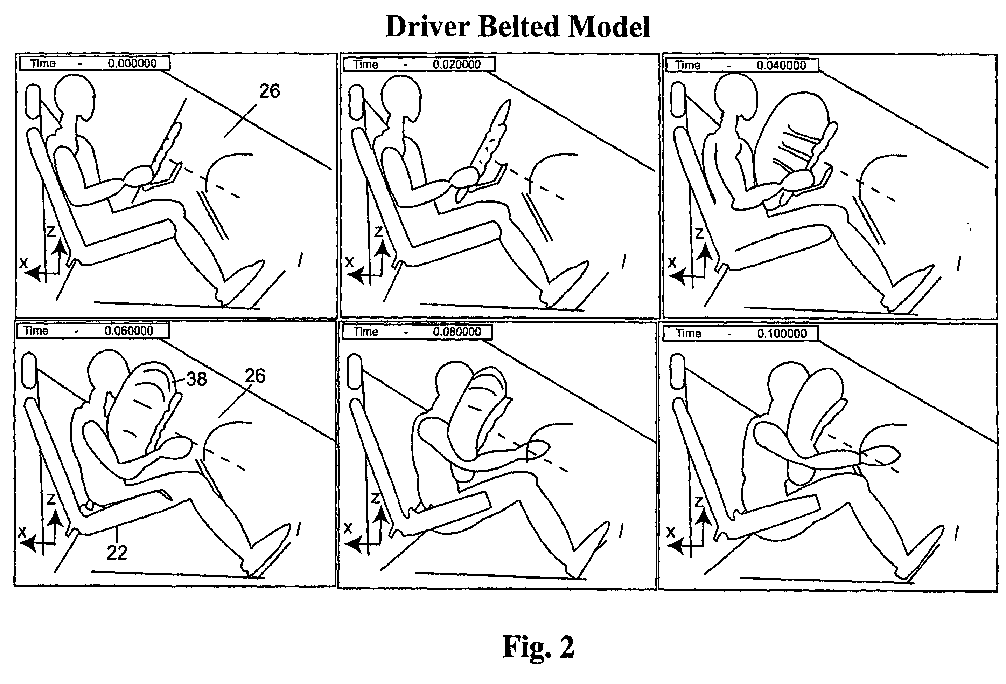

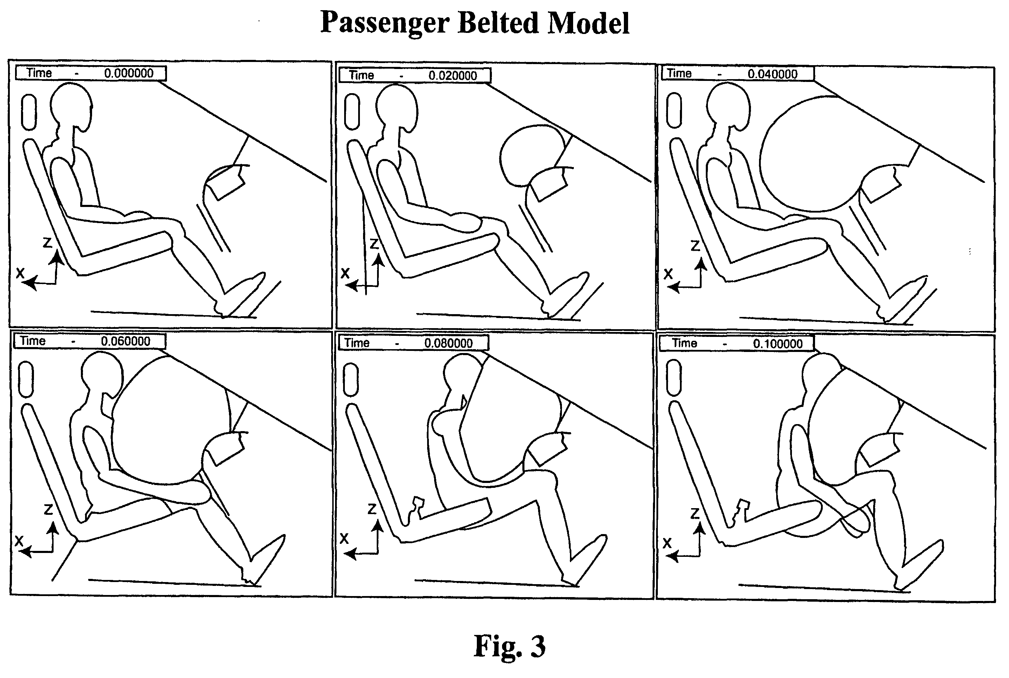

The following example shows how to define the biomechanical gray zones for a given restraint system. Figs. 2 and 3 show the interior of a generic industry representative vehicle. Driver and passenger simulation models were correlated against sled tests. Figs. 2 and 3 show belted driver and unbelted passenger kinematics. The driver airbag and Passenger airbag simulator models were correlated with a physical dynamic drop-tower test to correlate airbag energy.

Crash pulses used in the simulation were generated from barrier tests of a unibody vehicle or scaled from these tests using known algorithms. Table 1 shows a list of pulses, their time to fire (TTF) and respective sources.

**Table 1,**

| Pulse Description | | |
|---|---|---|
| Impact Velocity | TTF (ms) | Barrier / Scaled |
| 19 km/h | 36.2 | Barrier |
| 26 km/h | 26.0 | Barrier |
| 29 km/h | 26.0 | Barrier |
| 32 km/h | 24.5 | Barrier |
| 35 km/h | 23.5 | Barrier |
| 39 km/h | 19.5 | Barrier |
| 42 km/h | 15.5 | Scaled |
| 45 km/h | 14.0 | Scaled |
| 48 km/h | 15.0 | Barrier |
| 53 km/h | 13.0 | Scaled |
| 56 km/h | 13.0 | Barrier |

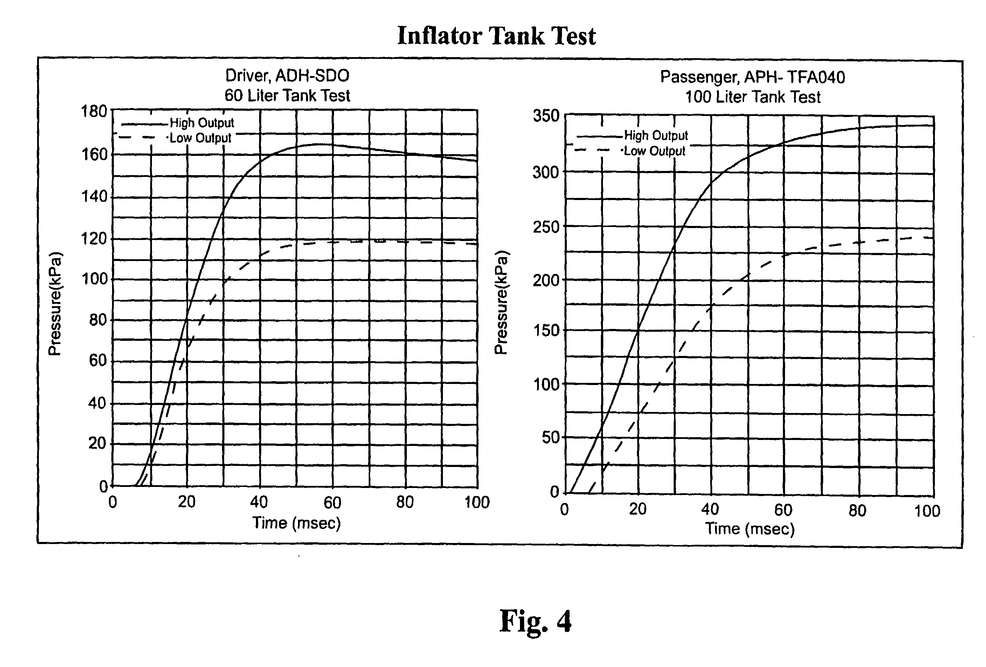

The inflators used for this study were the ARC Hybrid Dual Stage ADH-SDO and APH-TFA040 for the driver and passenger respectively. Fig. 4 shows the high-level and low-level tank pressure time history for the ADH-SDO and APH-TFA040 inflators.

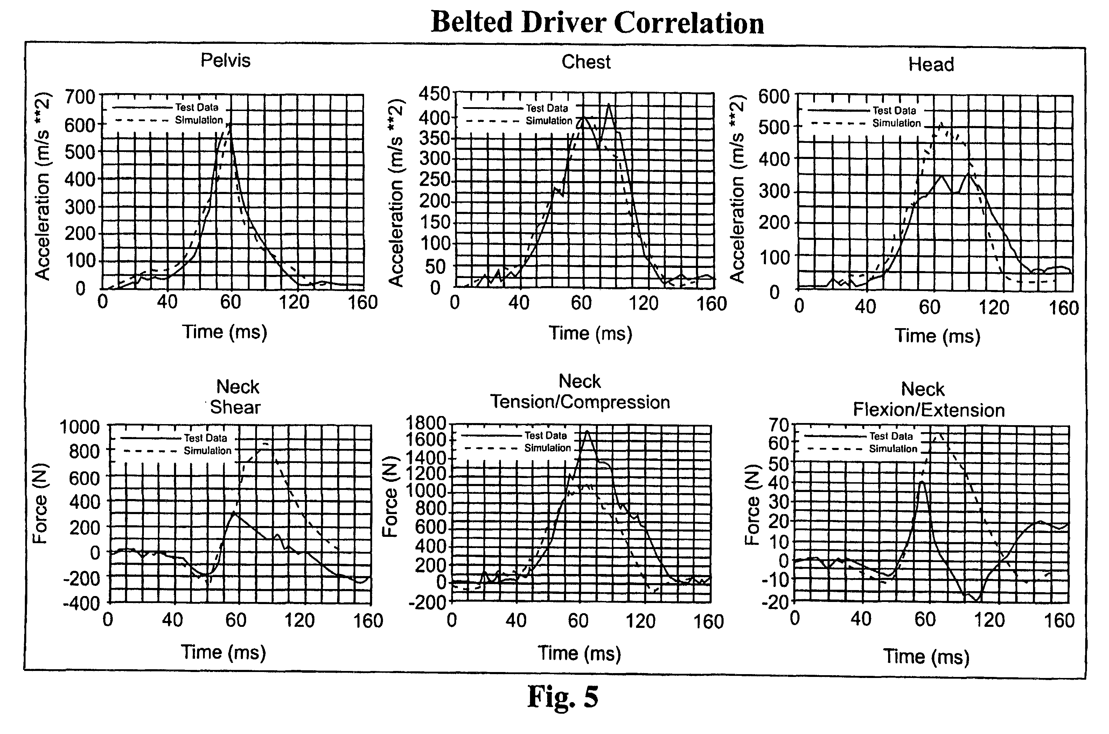

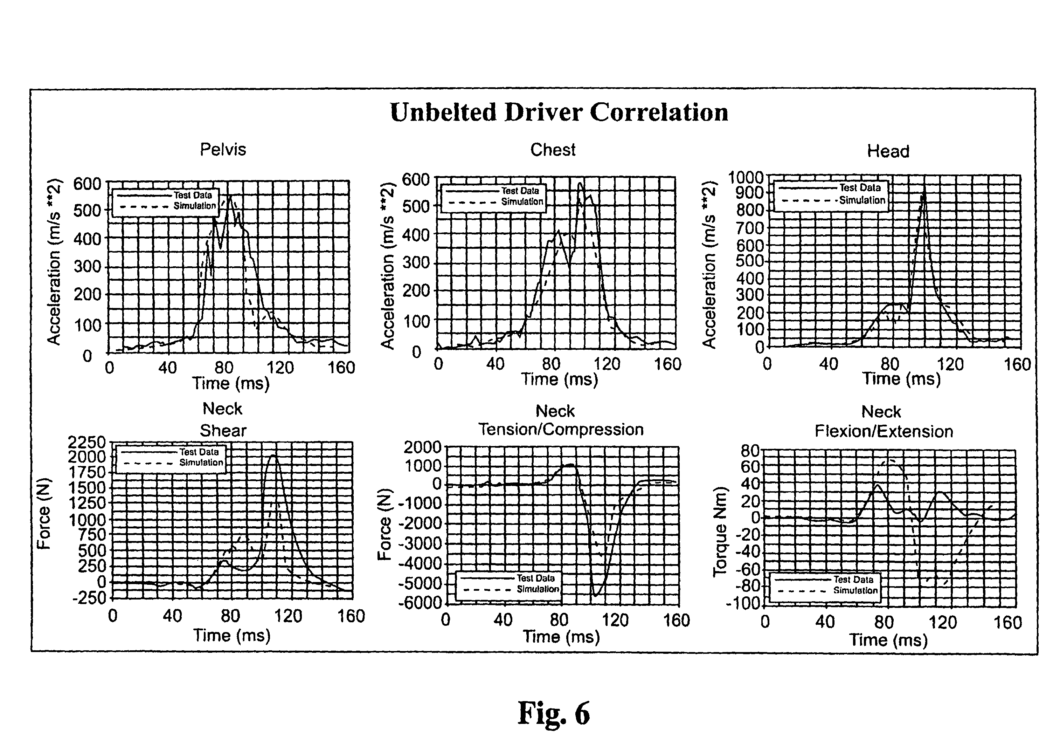

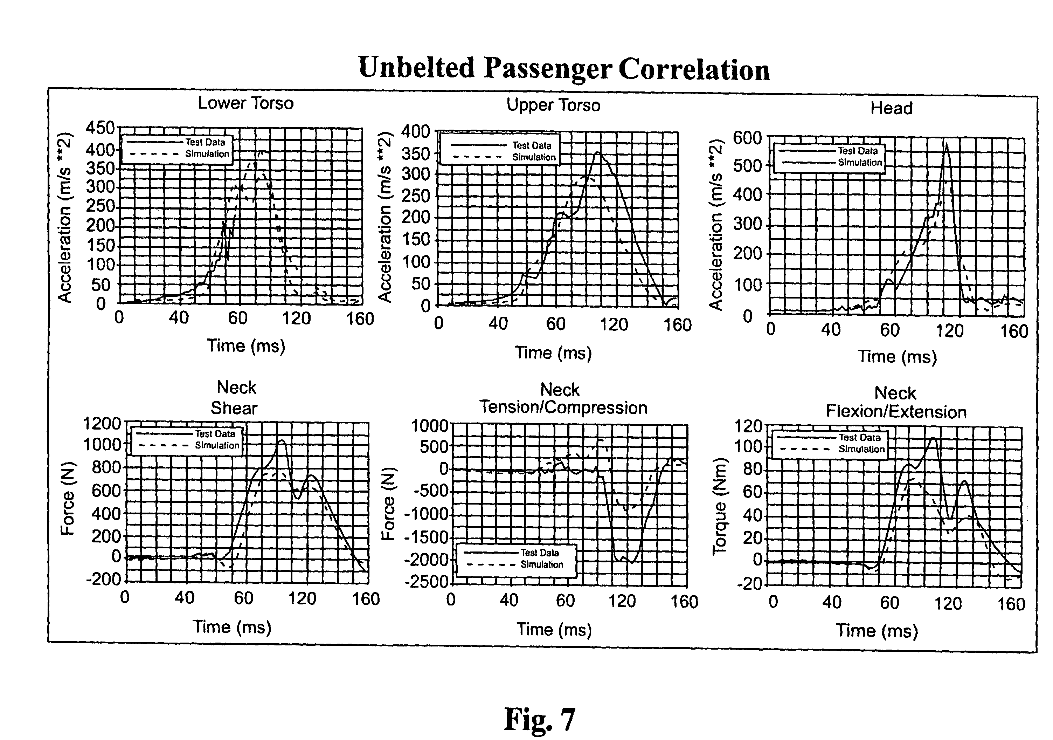

The generic model was originally correlated at a system and subsystem level. For the Driver interior model correlation, a 48 km/h belted and unbelted configuration was used. Figs. 5 and 6 show the driver correlation between the model and the sled test. The column stroke and steering wheel rim stiffness were correlated to drop-tower testing. The belted model correlation was performed in a belted-only sled test condition. For the Passenger interior model correlation, an AAMA unbelted configuration was used. Fig. 7 shows the passenger correlation.

A series of tank tests were performed at high and low-level outputs. These tests were performed for the driver inflator (ADH-SDO) and the passenger inflator (APH-TFA040). The tank test pressure time history was recorded then simulated in a vehicle occupant simulation virtual tank test. The correlated inflator outputs were then used in the airbag validation.

The dual-stage airbags were tested in a vertical drop-tower, where the drop-mass acceleration and bag pressure was recorded. This data was used to correlate the airbags, which were then input into the system level models.

By correlating the models at a subsystem level, a high degree of confidence was achieved with the models in their ability to predict trends in vehicle occupant performance. These models were then used in a full factorial DOE (designed experiments) with the following variables: impact velocity, inflator output and belt condition.

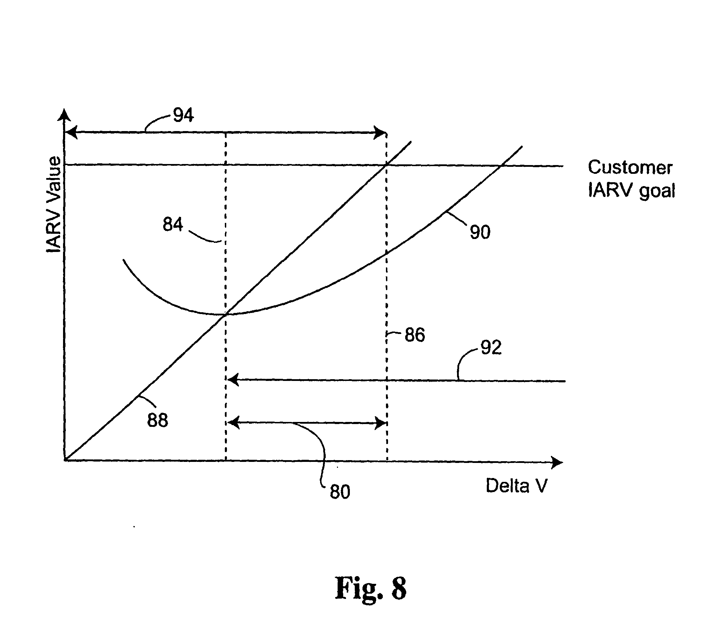

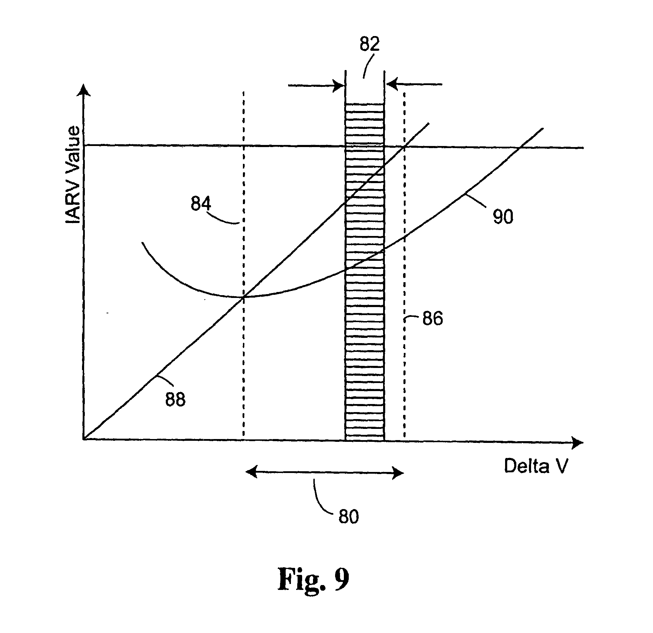

With the introduction of dual-stage airbags, the vehicle crash controller sensing must decide when to fire a high-level and low-level inflator output. A must-fire threshold has to be generated for each stage of firing. Due to the nature of sensing systems and vehicle structures, there will be a sensing gray zone 80 where the system could fire either a low or high-stage and either a no-fire or fire-low stage. To ensure vehicle occupant safety, the restraint system must have an equivalent gray zone 80 that is equal to or larger than the sensing gray zone 82. The restraint system gray zone is referred to as the Biomechanical Gray Zone. Fig. 8 illustrates the inflator thresholds and biomechanical gray zones 80. Fig. 9 shows the relationship between the sensing and biomechanical gray zones 80. The use of biomechanical gray zones 80 is especially important for unbelted vehicle occupants.

In this example, the biomechanically based no-fire high-level inflator output threshold speed 84 is defined as the speed where the low-output inflator produces higher in-position vehicle occupant performance values than the high-output inflator, but does not exceed the Injury Assessment Reference Value (IARV) goals. This defines when the high-output inflator may be fired. In some cases, it may be possible to set the no-fire high-level threshold speed at a lower or higher speed, since IARV goals are not exceeded.

The biomechanically based must-fire high-level inflator output threshold speed 86 is defined as the speed where the vehicle occupant performance with the low-level inflator output exceeds the IARV goals. At this point 86 the high-output inflator must be fired. The velocity region between the no-fire high-level and must-fire high-level threshold speed is defined as the biomechanical gray zone 80.

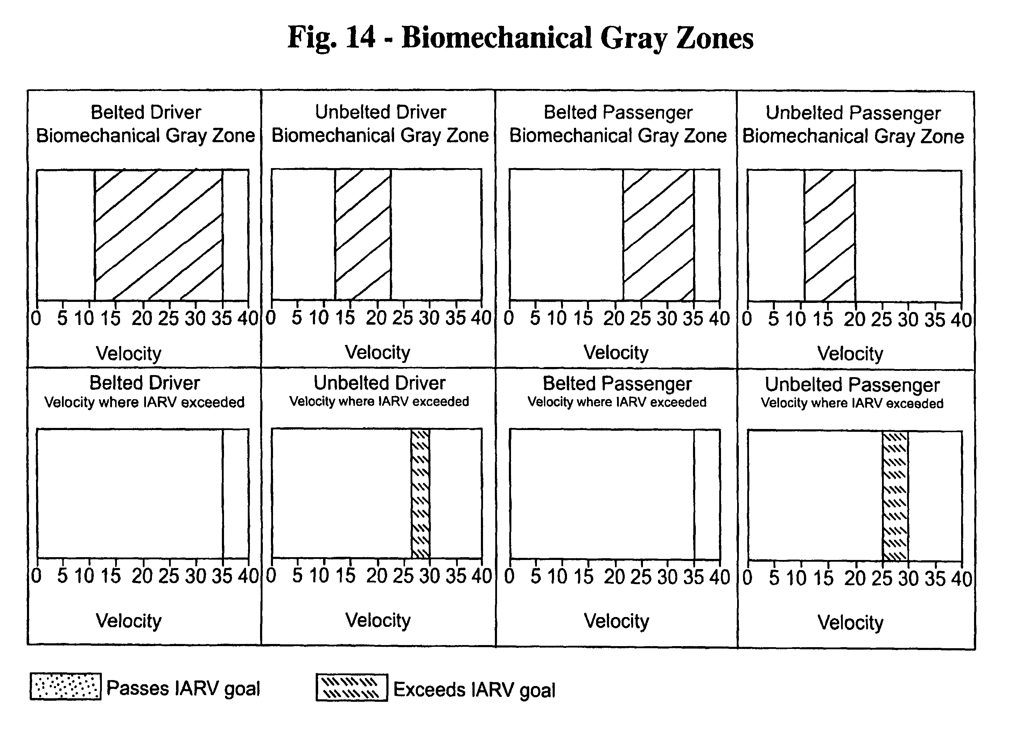

Curve 88 is the performance curve of the system with a low-level output. Curve 90 represents the performances of a given IARV level with a high-output inflator. Region 92 defines where a high-level output gives better results for a given crash than a low-output or no inflator. Region 94 defines where a vehicle occupant will see less than the IARV goal with a low-level inflator. It must be noted that these zones are defined by each IARV level. The system's biomechanical zone is a combination of the zones 80 seen in Fig. 14.

As seen in Figs. 5 - 7 the vehicle occupant simulation model was over predicting the neck responses. For this reason these values are not used in defining the biomechanical gray zones in this simulation study. Further work is required to improve the neck correlation if the simulation is to be used to assess neck biomechanical gray zones.

For the purpose of this example, the IARV goals were normalized at 100% of the FMVSS 208 values as defined in the U.S.A. National Highway Traffic Safety Administration, "Development of the Improved Injury Criteria for the Assessment of Advanced Automotive Restraint Systems" September, 1998. In practice, car manufactures tend to use values equal to or less than 80% of the regulated FMVSS value, to provide compliance margin. Table 2 shows the IARV goal for each injury value, as defined by NHTSA. As these values are subject to change by the government or automotive manufacturers, they are merely exemplary.

**Table 2,**

| IARV's | |
|---|---|
| Injury Criteria | Limit |
| HIC (36ms) | 1000 |
| Head g's (3ms) | 80 g's |
| Chest g's(3ms) | 60 g's |
| Chest Deflection | 76.2 mm |
| CTI | 1.0 |
| Neck Shear (+/-) | 3100 N |
| Neck Tension | 3300 N |
| Neck Compression | 4000 N |
| Neck Flexion | 190 N*m |
| Neck Extension | 57 N*m |
| Nij | 1.4 |

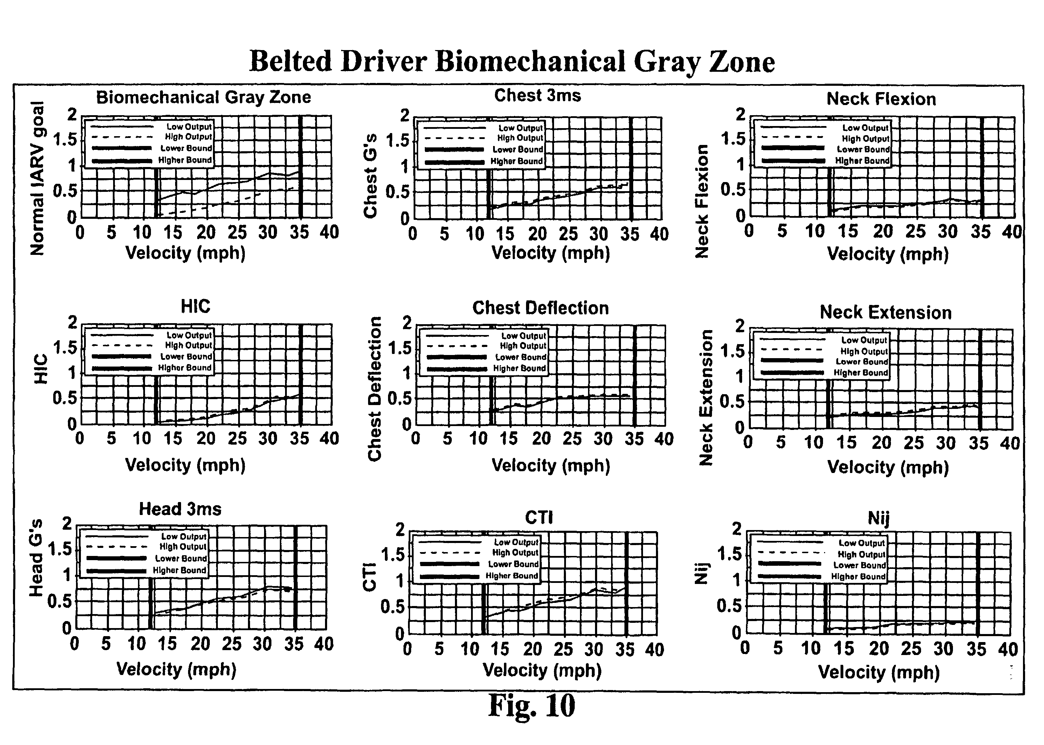

Beginning at Fig. 10 the drawings show the vehicle occupant performance values normalized with respect to each IARV goal for each inflator output as a function of impact velocity. The lower and upper bound of the biomechanical gray zone 80 is superimposed on each plot. This defines the biomechanical gray zone for each vehicle occupant performance value. Also, a plot of the minimum biomechanical gray zone 80, based on all vehicle occupant performance values, is shown.

Fig. 10 represents the results for a belted driver. The calculated vehicle occupant performance with low level does not cross over the calculated vehicle occupant performance with high level, so the low end of the biomechanical gray zone is set to the minimum velocity evaluated, 19 km/h.

Vehicle occupant performance values with the low-level inflator output do not exceed the IARV goals for the velocity range evaluated, so the high end of the biomechanical gray zone was set to the maximum velocity evaluated, 56 km/h.

Minimal vehicle occupant performance separation was observed with the high and low-output levels. This is attributed to the contribution of the seatbelt. The resulting biomechanical gray zone ranges from 19 km/h to 56 km/h.

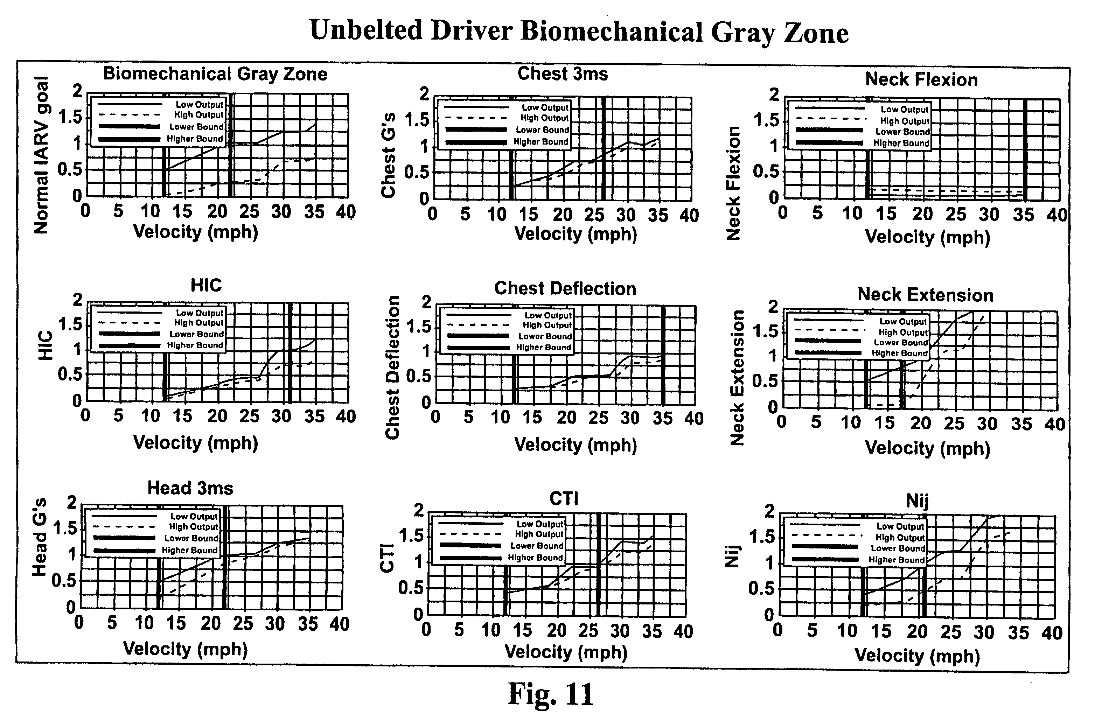

Fig. 11 represents the results for an unbelted driver. The calculated vehicle occupant performance with low level does not cross over the calculated vehicle occupant performance with high level, so the low end of the biomechanical gray zone is set to the minimum velocity evaluated, 19 km/h. Head G's, with the low-level inflator output, exceeded the IARV goal at 35 km/h; this defines the high end of the biomechanical gray zone. Head G's, with the high-level inflator output, exceeded the IARV goal at 44 km/h; the desired velocity is greater than 48 km/h and suggests a restraint system improvement is needed. The resulting biomechanical gray zone ranges from 19 km/h to 35 km/h.

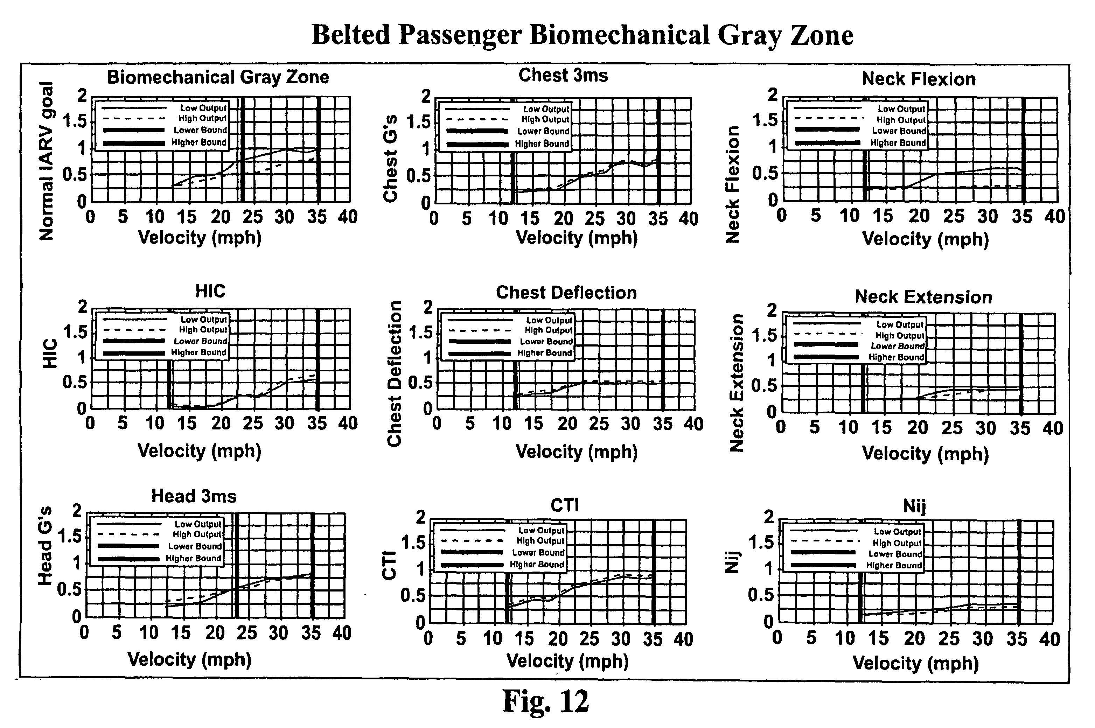

Fig. 12 represents the results for a belted passenger. The calculated head G's vehicle occupant performance with low level crosses over the calculated head G's vehicle occupant performance with high level at 37 km/h; this defines the low end of the biomechanical gray zone.

Vehicle occupant performance values with the low-level inflator output do not exceed the IARV goals for the velocity range evaluated, so the high end of the biomechanical gray zone was set to the maximum velocity evaluated, 56 km/h. Minimal vehicle occupant performance separation was observed with the high and low-output levels. This is attributed to the seatbelt. The resulting biomechanical gray zone ranges from 37 km/h to 56 km/h.

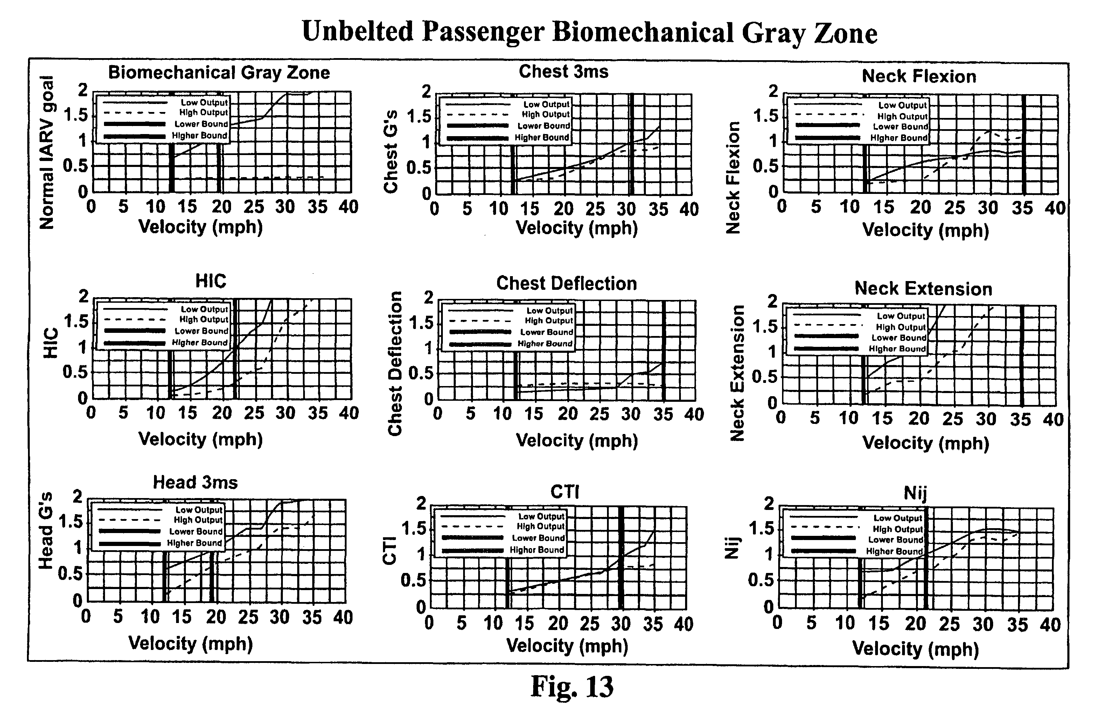

Fig. 13 represents the results for an unbelted passenger. The calculated chest deflection vehicle occupant performance with low level crosses over the calculated chest deflection vehicle occupant performance with high level at 45 km/h, but there is minimal separation and the magnitude of the injury values are less than 30% of the IARV goal. The chest deflection crossover point was ignored and the low end of the biomechanical gray zone can be set to the minimum velocity evaluated, 19 km/h. Head G's, with the low-level inflator output, exceeded the IARV goal at 30 km/h; this defines the high end of the biomechanical gray zone.

Head G's, with the high-level inflator output, exceeded the IARV goal at 41 km/h; the desired velocity is greater than 48 km/h and suggests a restraint system improvement is needed. The resulting biomechanical gray zone ranges from 19 Km/h to 31 km/h.

For each restraint condition, the biomechanical gray zone 80 for each IARV was calculated. The biomechanical gray zone 80 for each IARV was then overlaid to identify the smallest gray zone for each restraint condition. Fig. 14 shows the smallest gray zones produced from all the IARV's.

In addition, Fig. 14 shows the restraint performance with respect to the IARV goals. The vehicle occupant performance values should not exceed the IARV goals at a velocity less than 48 km/h for an unbelted vehicle occupant and 56 km/h for a belted vehicle occupant.

The biomechanical gray zone for a belted driver spans the entire velocity range evaluated suggesting further studies outside the velocity range considered may be desired before the actual limits of the biomechanical gray zone can be defined. The IARV goals are met at all speeds assessed.

The low end of the biomechanical gray zone for the unbelted driver is defined by the lowest impact velocity evaluated, not the crossover of the low and high-level inflator output vehicle occupant response curves. This may require further study below the given velocity range. Head G's controls the high end of the biomechanical gray zone. The head G's exceeded the IARV goals at a velocity below the desired maximum speed.

Head G's controls the low end of the biomechanical gray zone for the belted passenger, while within the speed range evaluated nothing controlled the high end of the biomechanical gray zone. The IARV goals are met at all speeds assessed.

The low end of the biomechanical gray zone for the unbelted passenger is set by the lowest impact velocity evaluated, not the crossover of the low and high-level inflator output vehicle occupant performance curves. Further study may be desired below the given velocity range. Head G's IARV goal control the high end of the biomechanical gray zone. For the unbelted passenger the head G's exceed the IARV goals below the maximum velocity assessed.

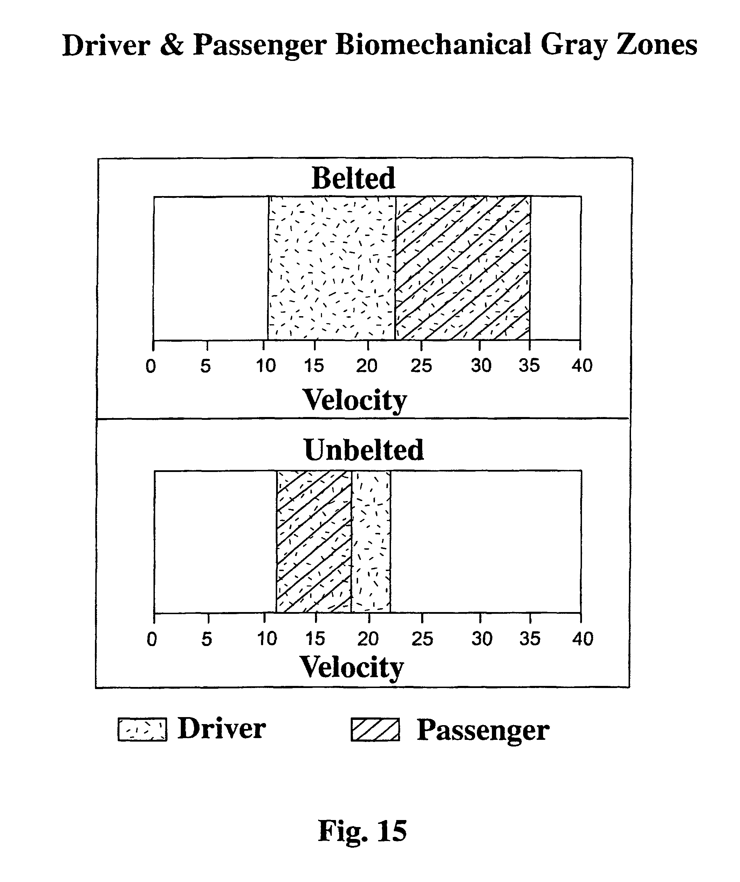

Separate biomechanical gray zones can be calculated for drivers and passengers. When they are combined an overall composite picture can be created for vehicle occupant performance. Fig. 15 shows the relationship of the biomechanical gray zone as a function of impact velocity. The region where the driver and passenger overlap defines the composite biomechanical gray zone, assuming common driver and passenger thresholds are used.

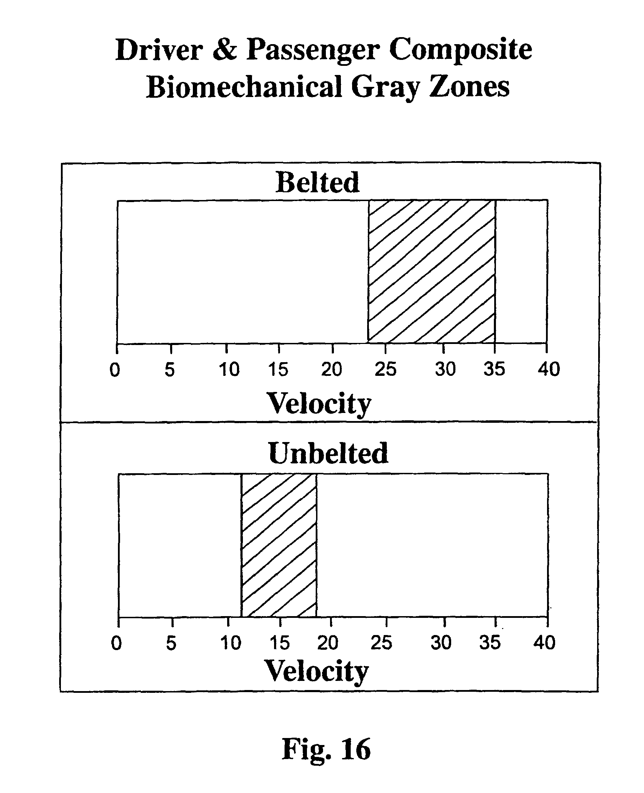

Fig. 16 represents the composite driver and passenger biomechanical gray zones for each restraint condition. Fig. 16 defines the velocity ranges where acceptable biomechanical performance is produced with high or low output inflators. The biomechanical gray zones can be overlaid with the sensing gray zones produced by the crash algorithm. Ideally the sensing gray zones should fall inside the biomechanical gray zones. Fig. 16 is useful for identifying discrepancies between the sensor and restraint system performances, and is crucial in obtaining a balanced restraint system design.

The belted driver biomechanical gray zones span the entire velocity range evaluated. Within the speed ranges evaluated, the belted driver meets all IARV goals for low or high-level inflator output. The unbelted driver low-end biomechanical gray zones were set by the lowest impact velocity evaluated. The unbelted driver high-end biomechanical gray zone is controlled by head G's. This appears to be caused by the head-to-windscreen contact.

The unbelted driver exceeds the head G's goal at a velocity below the maximum speed assessed. The belted passenger low-end biomechanical gray zone is controlled by head G's, while the high end was not controlled by any vehicle occupant performance measurement and was based on the highest impact velocity evaluated.

The unbelted passenger low-end biomechanical gray zones were set by the lowest impact velocity evaluated. The unbelted passenger high-end biomechanical gray zone is controlled by head G's. The unbelted passenger exceeds the head G's IARV goal. at a velocity below the maximum speed assessed.

## Claims

1. A vehicle occupant sensing apparatus for controlling the operating characteristics of a vehicle's safety restraint system, comprising:
an airbag module (30) having an inflator capable of generating a low-level output (52) and an inflator capable of generating a high-level output (54);
a crash sensor (25) producing a first signal indicating the deceleration of the vehicle during a crash;
a controller (62) receiving the first signal, said controller having a first lower threshold indicative of the minimum change in velocity at which the inflator capable of generating a low-level output (52) should be activated, and a must-fire high threshold indicative of a minimum change in velocity at which the inflator capable of generating a high-level output (54) should be activated, and generating a control signal that is used to control the operating characteristics of the vehicle's safety restraint system;
sensors (24, 70, 73, 76) providing vehicle occupant information about restraint conditions;
**characterised in that**:
said first lower threshold (84) is defined as the lowest impact velocity where the inflator capable of generating a low-level output (52) produces higher in-position vehicle occupant performance values than the inflator capable of generating a high-level output (54), but does not exceed the out-of-position Injury Assessment Reference Value (IARV) goals;
and that said must-fire high threshold (86) is defined as the lowest impact velocity where the inflator capable of generating a low-level output (52) produces in-position vehicle occupant performance values exceeding said out-of-position Injury Assessment Reference value (IARV) goals;
wherein said in-position vehicle occupant performance values are. evaluated as a function of said inflator output, the impact velocity and said vehicle occupant information about restraint conditions.

2. The vehicle occupant sensing apparatus as claimed in claim 1 wherein the IARV goals are normalized at 100% of the U.S.A. FMVSS 208 values.

3. The vehicle occupant sensing apparatus as claimed in claim 2 wherein the Injury Assessment Reference Value (IARV) goals are selected from the group of HIC (36ms), head g's, chest g's, chest deflection, CTI, neck shear, neck tension, neck compression, neck extension, and combinations thereof.

4. The vehicle occupant sensing apparatus as claimed in claim 1 wherein the IARV goals are less than the U.S.A. FMVSS 208 values.

5. The vehicle occupant sensing apparatus as claimed in claim 4 wherein at least one IARV goal is between about 60% and 80% of the U.S.A. FMVSS 208 values.

6. The vehicle occupant sensing apparatus as claimed in claim 1 in which said sensors (24, 70, 73, 76) provide a belt signal indicative of whether a vehicle occupant's seat belt is property engaged.

7. The vehicle occupant sensing apparatus as claimed in claim 6, wherein said in-position vehicle occupant performance values are evaluated as a function of the engagement of the safety belt, as well as of the inflator output and of said impact velocity.

8. The apparatus as claimed in claim 7, having first lower threshold and first must-fire high threshold evaluated when said sensors (24, 70, 73, 76) provide a signal indicating that the vehicle occupant's seat belt is not properly engaged and second lower threshold and second must-fire high threshold evaluated when said sensors (24, 70, 73. 76) provide a signal indicating that the vehicle occupant's seat belt is properly engaged.

9. The apparatus as claimed in claim 6 wherein the controller (62) defines a velocity region between the lower threshold velocity and the must-fire high threshold velocity wherein either the inflator capable of generating a low-level output (52) or the inflator capable of generating a high-level output (54) may be actuated.

10. The apparatus as claimed in claim 2. wherein said sensors (24, 70, 73, 76) further detect the location of a vehicle occupant within the vehicle compartment (26).

## Patentansprüche

1. Fahrzeuginsassenerfassungsvorrichtung zum Regeln der Betriebskenngrößen des Sicherheitsrückhaltesystems in einem Fahrzeug, die Folgendes umfasst:
ein Airbagmodul (30) mit einem Gasgenerator, der einen Low-Level-Ausstoß (52) erzeugen kann, und einem Gasgenerator, der einen High-Level-Ausstoß (54) erzeugen kann;
einen Crash-Sensor (25) zum Erzeugen eines ersten Signals, das die Verlangsamung des Fahrzeugs bei einem Crash anzeigt;
einen Controller (62), der das erste Signal empfängt, wobei der Controller einen ersten unteren Schwellenwert, der die Mindeständerung der Geschwindigkeit anzeigt, bei der der Gasgenerator, der einen Low-Level-Ausstoß (52) erzeugen kann, aktiviert werden soll, und einen hohen Zwangsauslösungsschwellenwert hat, der eine Mindeständerung der Geschwindigkeit anzeigt, bei der der Gasgenerator, der einen High-Level-Ausstoß (54) erzeugen kann, aktiviert werden soll, und der ein Steuersignal empfängt, das zum Regeln der Betriebskenngrößen des Sicherheitsrückhaltesystems in einem Fahrzeug verwendet wird,
Sensoren (24, 70, 73, 76), die Fahrzeuginsasseninformationen über Rückhaltebedingungen bereitstellen;
**dadurch gekennzeichnet, dass**:
der erste untere Schwellenwert (84) als die niedrigste Aufprallgeschwindigkeit definiert ist, bei der der Gasgenerator, der einen Low-Level-Ausstoß (52) erzeugen kann, höhere In-Position-Fahrzeuginsassen-Leistungswerte erzeugt als der Gasgenerator, der einen High-Level-Ausstoß (54) erzeugen kann, der aber die Außerpositions-IARV-Zielwerte (Injury Assessment Reference Value = Verletzungsbeurteilungsreferenzwert) nicht übersteigt;
und dass der Zwangsauslösungsschwellenwert (86) als die niedrigste Aufprallgeschwindigkeit definiert ist, bei der der Gasgenerator, der einen Low-Level-Ausstoß (52) erzeugen kann, In-Position-Fahrzeuginsassen-Leistungswerte erzeugt, die die Außerpositions-IARV-Zielwerte übersteigen;
wobei die In-Position-Fahrzeuginsassen-Leistungswerte auf der Basis des Gasgeneratorausgangs, der Aufprallgeschwindigkeit und der Fahrzeuginsasseninformationen über Rückhaltebedingungen beurteilt werden.

2. Fahrzeuginsassenerfassungsvorrichtung nach Anspruch 1, wobei die IARV-Zielwerte auf 100% der U.S.A. FMVSS 208 Werte normalisiert werden.

3. Fahrzeuginsassenerfassungsvorrichtung nach Anspruch 2, wobei die IARV-Zielwerte ausgewählt werden aus der Gruppe von HIC (Head Injury Criterion = Kopfverletzungskriterium) (36 ms), Kopf-G-Werten, Brust-G-Werten, Brustdurchbiegung, CTI (Combined Thoracic Index), Nackenscherung, Nackenspannung, Nackenkompression, Nackendehnung und Kombinationen davon.

4. Fahrzeuginsassenerfassungsvorrichtung nach Anspruch 1, wobei die IARV-Zielwerte geringer sind als die U.S.A. FMVSS 208 Werte.

5. Fahrzeuginsassenerfassungsvorrichtung nach Anspruch 4, wobei wenigstens ein IARV-Zielwert zwischen etwa 60% und 80% der U.S.A. FMVSS 208 Werte liegt.

6. Fahrzeuginsassenerfassungsvorrichtung nach Anspruch 1, wobei die genannten Sensoren (24, 70, 73, 76) ein Gurtsignal erzeugen, das anzeigt, ob der Sitzgurt eines Fahrzeuginsassen ordnungsgemäß angelegt ist.

7. Fahrzeuginsassenerfassungsvorrichtung nach Anspruch 6, wobei die In-Position-Fahrzeuginsassen-Leistungswerte auf der Basis der Anlage des Sicherheitsgurtes sowie des Gasgeneratorausgangs und der Aufprallgeschwindigkeit beurteilt werden.

8. Vorrichtung nach Anspruch 7, wobei der erste untere Schwellenwert und der erste hohe Zwangsauslösungsschwellen beurteilt werden, wenn die Sensoren (24, 70, 73, 76) ein Signal erzeugen, das anzeigt, dass der Sitzgurt des Fahrzeuginsassen nicht ordnungsgemäß angelegt ist, und der zweitere untere Schwellenwert und der zweite hohe Zwangsauslösungsschwellenwert beurteilt werden, wenn die Sensoren (24, 70, 73, 76) ein Signal erzeugen, das anzeigt, dass der Sitzgurt des Fahrzeuginsassen ordnungsgemäß angelegt ist.

9. Vorrichtung nach Anspruch 6, wobei der Controller (62) einen Geschwindigkeitsbereich zwischen der unteren Schwellengeschwindigkeit und der hohen Zwangsauslösungsschwellengeschwindigkeit definiert, wobei entweder der Gasgenerator, der einen Low-Level-Ausstoß (52) erzeugen kann, oder der Gasgenerator, der einen High-Level-Ausstoß (54) erzeugen kann, betätigt werden kann.

10. Vorrichtung nach Anspruch 2, wobei die Sensoren (24, 70, 73, 76) ferner den Ort eines Fahrzeuginsassen im Fahrgastraum (26) erfasst.

## Revendications

1. Dispositif de détection d'occupant d'un véhicule pour commander les caractéristiques de fonctionnement d'un système de retenue de sécurité du véhicule, comprenant:
un module à coussin gonflable (30) possédant un dispositif de gonflage capable de générer une sortie de niveau bas (52) et un dispositif de gonflage capable de générer une sortie de niveau haut (54);
un détecteur d'impact (25) produisant un premier signal indiquant la décélération du véhicule pendant une collision;
un régisseur (62) recevant le premier signal, ledit régisseur comportant un premier seuil inférieur représentatif de la variation minimale de vitesse à laquelle le dispositif de gonflage capable de générer une sortie de niveau bas (52) devra être activé, et un seuil élevé de déclenchement impératif représentatif d'une variation minimale de vitesse à laquelle le dispositif de gonflage capable de générer une sortie de niveau haut (54) devra être activé, et générant un signal de commande qui est utilisé pour commander les caractéristiques de fonctionnement du système de retenue de sécurité du véhicule;
des capteurs (24, 70, 73, 76) fournissant des informations d'occupant de véhicule concernant les conditions de retenue;
**caractérisé en ce que**:
ledit premier seuil inférieur (84) est défini comme étant la vitesse d'impact la plus basse à laquelle le dispositif de gonflage capable de générer une sortie de niveau bas (52) produit des valeurs de performance d'occupant de véhicule en position supérieures à celles du dispositif de gonflage capable de générer une sortie de niveau haut (54), mais ne dépasse pas les objectifs de Valeur de Référence d'Evaluation de Blessure (VREB) hors position;
et **en ce que** ledit seuil élevé de déclenchement impératif (86) est défini comme étant la vitesse d'impact la plus basse à laquelle le dispositif de gonflage capable de générer une sortie de niveau bas (52) produit des valeurs de performance d'occupant de véhicule en position dépassant lesdits objectifs de Valeur de Référence d'Evaluation de Blessure (VREB) hors position;
dans lequel lesdites valeurs de performance d'occupant de véhicule en position sont évaluées en fonction de ladite sortie de dispositif de gonflage, de ladite vitesse d'impact et desdites informations d'occupant de véhicule concernant les conditions de retenue.

2. Dispositif de détection d'occupant de véhicule selon la revendication 1, dans lequel les objectifs de VREB sont normalisés à 100% des valeurs FMVSS 208 des Etats-Unis.

3. Dispositif de détection d'occupant de véhicule selon la revendication 2, dans lequel les objectifs de Valeur de Référence d'Evaluation de Blessure (VREB) sont sélectionnés dans le groupe constitué du HIC (critère de blessure à la tête) (36 ms), de la décélération (en g) de la tête, de la décélération (en g) de la poitrine, de la flexion de la poitrine, du CTI (index thoracique combiné), du cisaillement du cou, de la tension du cou, de la compression du cou, de l'extension du cou et de leurs combinaisons.

4. Dispositif de détection d'occupant de véhicule selon la revendication 1, dans lequel les objectifs de VREB sont inférieurs aux valeurs FMVSS 208 des Etats-Unis.

5. Dispositif de détection d'occupant de véhicule selon la revendication 4, dans lequel au moins un objectif de VREB est compris entre 60% et 80% des valeurs FMVSS 208 des Etats-Unis.

6. Dispositif de détection d'occupant de véhicule selon la revendication 1, dans lequel lesdits capteurs (24, 70, 73, 76) fournissent un signal de ceinture indiquant si la ceinture de sécurité d'un occupant de véhicule est correctement enclenchée.

7. Dispositif de détection d'occupant de véhicule selon la revendication 6, dans lequel lesdites valeurs de performance d'occupant de véhicule en position sont évaluées en fonction de l'enclenchement de la ceinture de sécurité, ainsi qu'en fonction de la sortie du dispositif de gonflage et de ladite vitesse d'impact.

8. Dispositif selon la revendication 7, comportant un premier seuil inférieur et un premier seuil élevé de déclenchement impératif évalués lorsque lesdits capteurs (24, 70, 73, 76) fournissent un signal indiquant que la ceinture de sécurité de l'occupant du véhicule n'est pas correctement enclenchée et un deuxième seuil inférieur ainsi qu'un deuxième seuil élevé de déclenchement impératif évalués lorsque lesdits capteurs (24, 70, 73, 76) fournissent un signal indiquant que la ceinture de sécurité de l'occupant du véhicule est correctement enclenchée.

9. Dispositif selon la revendication 6, dans lequel le régisseur (62) définit une zone de vitesse entre la vitesse de seuil inférieur et la vitesse de seuil élevé de déclenchement impératif dans laquelle, soit le dispositif de gonflage capable de générer une sortie de niveau bas (52), soit le dispositif de gonflage capable de générer une sortie de niveau haut (54), peut être actionné.

10. Dispositif selon la revendication 2, dans lequel lesdits capteurs (24, 70, 73, 76) détectent en outre la position d'un occupant de véhicule dans le compartiment (26) du véhicule.
